**Europäisches Patentamt**

(19) **European Patent Office**

**Office européen des brevets**

(11) Publication number : **0 416 091 B1**

## (12) EUROPEAN PATENT SPECIFICATION

(45) Date of publication of patent specification :
27.10.93 Bulletin 93/43

(51) Int. Cl.[5] : **A23G 3/30**, A23L 1/236, A23G 3/00

(21) Application number : 90905872.9

(22) Date of filing : 13.03.90

(86) International application number :
PCT/US90/01376

(87) International publication number :
WO 90/11018 04.10.90 Gazette 90/23

(54) **IMPROVED ALITAME STABILITY USING HYDROGENATED STARCH HYDROLYSATE SYRUPS.**

The file contains technical information submitted after the application was filed and not included in this specification

(30) Priority : 28.03.89 PCT/US89/01269
01.03.90 US 487760

(43) Date of publication of application :
13.03.91 Bulletin 91/11

(45) Publication of the grant of the patent :
27.10.93 Bulletin 93/43

(84) Designated Contracting States :
AT DE DK ES FR GB IT NL

(56) References cited :
EP-A- 0 297 048
EP-A- 0 372 693
WO-A-87/02223
WO-A-88/08672
GB-A- 2 167 641
US-A- 4 208 431
US-A- 4 411 925

(56) References cited :
US-A- 4 536 396
US-A- 4 556 565
US-A- 4 753 806
US-A- 4 774 094
US-A- 4 792 453
US-A- 4 861 600
US-A- 4 863 745
US-A- 4 863 745
US-A- 4 889 727
US-A- 4 904 482
US-A- 4 931 295

(73) Proprietor : WM. WRIGLEY JR. COMPANY
410 North Michigan Avenue
Chicago Illinois 60611 (US)

(72) Inventor : YATKA, Robert, J.
8823 West 147th Street
Orland Park, IL 60462 (US)
Inventor : FOSTER, Bruce, E.
8204 Anchor Drive, 704
Woodridge, IL 60515 (US)

(74) Representative : Allard, Susan Joyce et al
BOULT, WADE & TENNANT, 27 Furnival Street
London EC4A 1PQ (GB)

## Description

This application is a continuation-in-part of Application Serial No. PCT/US89/01269, published as WO 90/06061 on 14th June, 1990.

The present invention relates to comestibles sweetened with Alitame. More particularly, the invention relates to chewing gum containing Alitame wherein the stability of the Alitame is improved.

Alitame is the generic name of a high-potency sweetner with a chemical composition of L-$\alpha$-Aspartyl-N-(2,2,4,4-tetramethyl-3-thietanyl)-D-alaninamide hydrate. This sweetener, which is not yet approved for use in food products and chewing gum, is being-considered by the FDA as a food additive. The manufacturer of Alitame is the Pfizer Corporation of Groton, Connecticut. Alitame is considered to be about 2000 times as sweet as sugar, and 5 to 10 times as sweet as aspartame. Aspartame, another dipeptide high-potency sweetener, is a well-known comestible ingredient, but also has problems in that it degrades in the presence of water, and is especially unstable at pH's below 3 and above 5. Several patents have discussed various procedures for preventing degradation of aspartame into non-sweetening decomposition products. For example, U.S. Patent No. 4,738,854 suggests that comestible compositions such as chewing gum containing unencapsulated aspartame may be protected against moisture induced degradation by including freely dispersed hydrogenated starch hydrolysate (HSH) in the comestible. The patent suggests that preferably 7 to 15% HSH is used, and that 70 to 80% or more of the aspartame is recoverable after 24 days of storage at 41° (105°F) and 30% relative humidity. The patent also states that liquid sorbitol, in lieu of HSH, does not provide compositions in which the aspartame is very stable over long periods of time.

Japanese Patent Application Publication 59-173066 discloses the use of various saccharides, including hydrogenated starch hydrolysates, as providing an aspartame stability effect in high water content food products.

U.S. Patents Nos. 4,753,806 and 4,774,094 disclose the use of "cooked" HSH solutions to stabilize aspartame and make a flexible gum. Other patents teach the use of aspartame and HSH in chewing gum. For example, PCT Application PCT/US83/0173, published as WO 85/01862 on May 9, 1985, (which appears to be the equivalent disclosure of U.S. Patent No. 4,556,565) discloses the use in sugarless gum of aspartame encapsulated with a syrup which includes HSH.

U.S. Patent No. 4,208,431 discloses a chewing gum which optionally includes both HSH and aspartame.

Alitame has been suggested for use in chewing gum. Such use has been disclosed in several patents. U.S. Patent No. 4,411,925 discloses simple addition of Alitame in gum. U.S. Patent No. 4,536,396 discloses combinations of Alitame and Acesulfame K in foods including chewing gum. These patents, however, do not discuss Alitame stability.

Alitame has been found to be relatively unstable and susceptible to degradation in chewing gums containing certain ingredients. This result was rather unexpected since Alitame has been shown to be much more stable in aqueous solutions than aspartame, and therefore, was expected to be much more stable in chewing gum. It would be considered a significant improvement to a chewing gum or other comestible to have the Alitame used to sweeten the comestible protected from such degradation.

It has been found that including an aqueous HSH syrup in comestibles containing Alitame enhances the stability of the Alitame with respect to the ingredients that cause Alitame degradation. It has also been found that limiting the amount of glycerine used in the comestible improves the Alitame stability. Thus the present invention includes an ingestible product comprising sweetness imparting amounts of Alitame, characterised in that there is included aqueous hydrogenated starch hydrolysate in amounts effective to stabilize said Alitame sweetening agent against decomposition during storage at 29°C (85°F) for eight weeks, whereby at least a 20% increase in Alitame stability, compared with a similar formula without HSH, is achieved.

According to the present invention there is also provided a process for reducing the amount of unencapsulated Alitame needed to be formulated into a comestible product which is at least partially sweetened therewith and which also contains Alitame destabilizing amounts of alditols,

and while still providing for a recoverable Alitame content of X% after the ambient commercial storage of said comestible product for at least eight weeks,

said X% being at least 20% of the reduced amount of said Alitame to be formulated into said comestible product,

which comprises:

formulating said comestible product with an amount of Alitame which is about 10 to 50% less than the amount of Alitame which would have been needed in said comestible product, in the absence of a stabilizer for said Alitame, to provide for a recoverable level of X% of Alitame after said storage period, and

with, as a stabilizer for such reduced amount of Alitame, an aqueous solution of hydrogenated starch hydrolysate in such amounts as to effectively stabilize said Alitame and provide for a recoverable Alitame content of X% after said storage period.

As used herein, the term chewing gum includes all types of gum compositions, including chewing gum, bubble gum and the like.

All percents used herein are weight percents unless otherwise specified.

The hydrogenated starch hydrolysates may be produced by catalytic hydrogenation of standard glucose syrups (acid and/or enzyme converted) to the point where all the glucose end groups or the saccharides are reduced to alcohols, that is, dextrose to sorbitol. The total solids contents will usually range from 65 to 80%, which solids are made of from 4 to 70%, and preferably 4 to 20% sorbitol, from 8 to 65%, and preferably from 20 to 65% hydrogenated disaccharides (that is, maltitol), and 20 to 80% of the higher ($\geqq$tri to hepta) hydrogenated saccharides. The preferred hydrogenated starch hydrolysates contain from 7 to 45%, and preferably about 15 to 45%, tri- to heptahydrogenated saccharides, and from 10 to 35%, and preferably 15 to 25%, hydrogenated saccharides higher than hepta.

Hydrogenated starch hydrolysate syrup is also referred to in the literature as hydrogenated glucose syrup, or by the trademark or tradename Lycasin polyol or Lonza polyol. The term hydrogenated starch hydrolysate (HSH) will be used herein to designate such material. The hydrogenated starch hydrolysate is usually sold commercially in the form of an aqueous solution having a moisture content of 20 to 35%.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. However, as discussed in U.S. patent No. 5039530, entitled "Storage Stable Chewing Gum Containing Alitame" filed on the same date as the present application, waxes are not preferred in gums of the present invention. According to the preferred embodiment of the present invention, the insoluble gum base constitutes from 5 to 95 percent by weight of the gum. More preferably the insoluble gum base comprises from 10 to 50 percent by weight of the gum and most preferably from 20 to 35 percent by weight of the gum.

The gum base typically also includes a filler component. The filler component may be calcium carbonate, magnesium carbonate, talc, dicalcium phosphate or the like. If wax is used in the gum, the preferred filler is talc, and calcium carbonate should be excluded. The filler may constitute from 5 to 60 percent by weight of the gum base. Preferably, the filler comprises from 5 to 50 percent by weight of the gum base.

Gum bases typically also contain softeners, including glycerol monostearate and glycerol triacetate. Further, gum bases may also contain optional ingredients such as antioxidants, colors, and emulsifiers.

The water-soluble portion of the chewing gum contains a bulking and sweetening agent. In sugar gums, the bulking and sweetening agent is the same, sucrose. In sugarless gums, the bulking and sweetening agents usually include sorbitol and high potency sweeteners like aspartame, or in this case, Alitame. The bulking and sweetening agents usually comprise from 30 to 90 percent of the gum composition, and preferably from 50 to 80 percent.

The water-soluble portion of the chewing gum may further comprise softeners, other sweeteners, flavoring agents and combinations thereof. Softeners are added to the chewing gum in order to optimize the chewability and mouth feel of the gum. Softeners, also known in the art as plasticizers or plasticizing agents, generally constitute from 0.5 to 15.0 percent by weight of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum. However, as discussed below, certain ingredients used as softeners have been found to greatly affect the stability of Alitame.

The flavor agent used in the gum may be present in an amount within the range of from 0.1 to 10.0 weight percent and preferably from 0.5 to 3.0 weight percent of the gum. The flavoring agents may comprise essential oils, synthetic flavors, or mixture thereof including, but not limited to, oils derived from plants and fruits for example citrus oils, fruit essences, peppermint oil, spearmint oil, clove oil, oil of wintergreen and anise. Artificial flavoring components are also contemplated for use in gums of the present invention. Those skilled in the art will recognize that natural and artificial flavoring agents may be combined in any sensorally acceptable blend. All such flavors and flavor blends are contemplated by the present invention. However, some flavors may cause degradation of the Alitame. See U.S. Patent No. 4,997,659, entitled "Improved Alitame Stability In Chewing Gum By Encapsulation", filed December 29, 1989.

Therefore, when producing storage stable gums sweetened with unencapsulated Alitame, flavors should be used which do not cause Alitame degradation.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener may also be added at this time, along with any syrup used, and a portion of the bulking agent. Further portions of the bulking agent may then be added to the mixer. The flavoring agent is typically added with the final portion of the bulking agent. The entire mixing procedure typically takes from five to fifteen minutes, but longer mixing times may sometimes be required.

Tests were done to compare the stability of Alitame and aspartame. Although Alitame was used at a much lower level than aspartame, since Alitame is five to ten times sweeter than Aspartame, the rate of degradation determined from the tests seemed to be the same in sugar type gum formulations, independent of the sweetener level. Results reported are the average from five experiments on sugar gum using five different gum bases.

## TABLE I

### % Of Original Sweetener Level Lost

|  | Initial Level | 1 week | 2 weeks | 4 weeks | 8 weeks |
|---|---|---|---|---|---|
| Aspartame | 0.20% | 2.7% | 9.3% | 10.8% | 17.4% |
| Alitame | 0.04% | 3.2% | 6.1% | 12.8% | 21.6% |

These results indicate that Alitame has stability similar to aspartame in sugar gum formulations. However, tests on sugarless gums suggested that alditols like sorbitol and mannitol, and glycerine, might degrade Alitame. As a result, several tests of Alitame in solution with these common sugarless ingredients were conducted.

Tests 1-5 were carried out to see the effect of sugar alcohols and glycerine upon Alitame. A 0.01% Alitame aqueous solution was divided equally into 5 portions. In Tests 1-3, glycerine, sorbitol and mannitol were individually added to one of the first three portions in proportions of 5 parts sugar alcohol or glycerine and 95 parts Alitame solution. In test 4, a 75/25 blend of HSH (Lycasin)/glycerine was added to the fourth portion in proportion of 5 parts of the blend and 95 parts Alitame solution. In test 5, there was no addition of sugar alcohol. Next, each test sample was divided in half and each half adjusted to a pH of either 5 or 7. Each resulting test sample was further divided in half again and one half was stored at room temperature while the second half was stored at 49°C (120°F). The Alitame stability results are indicated in Table II below.

## TABLE II

### Percent Original Alitame Remaining After 12 Weeks

|  | 24°C (75F°) pH 5 | 24°C (75°F) pH 7 | 49°C (120°F) pH 5 | 49°C (120°F) pH 7 |
|---|---|---|---|---|
| Test 1 5% Glycerol | 100 | 64 | 69 | 0* |
| Test 2 5% Sorbitol | 100 | 100 | 75 | 0** |
| Test 3 5% Mannitol | 100 | 94 | 80 | 0 |
| Test 4 5% HSH/ Glycerine blend | 100 | 94 | 77 | 47 |
| Test 5 Control (Alitame Only) | 97 | 100 | 95 | 79 |

 * No Alitame detected at 6 weeks.
** No Alitame detected at 8 weeks.

Analysis of the results showed that, unexpectedly, Alitame degraded at a much quicker rate in solutions of sugar alcohols and glycerine than solutions not containing these compounds, and that glycerine and, to a slightly lesser extent, the low molecular weight sugar alcohols sorbitol and mannitol seemed to particularly cause Alitame degradation. Also, the HSH appeared to slow Alitame degradation, considering the presence of glycerine in test 4.

Based on the above information, the following gum formulations were made:

|  | A(%) | B(%) | C(%) | D(%) |
|---|---|---|---|---|
| Base | 25.5 | 25.5 | 25.5 | 25.5 |
| Lecithin | 0.2 | 0.2 | 0.2 | 0.2 |
| Sorbitol | 49.46 | 49.46 | 46.46 | 46.46 |
| Mannitol | 8.0 | 8.0 | 8.0 | 8.0 |
| Sorbitol Liquid (70% Solids) | 7.7 | 15.4 | -- | -- |
| Glycerine | 7.7 | -- | -- | 9.2 |
| Peppermint Flavor | 1.4 | 1.4 | 1.4 | 1.4 |
| HSH (75% Solids) | -- | -- | 18.4 | 9.2 |
| Alitame | 0.04 | 0.04 | 0.04 | 0.04 |
|  | 100 | 100 | 100 | 100 |

These samples were stored in an incubator at 30°C (85°F) for 8 weeks and sampled periodically at 1,2,4,6 & 8 weeks, and analyzed for remaining, undegraded Alitame.
Results are shown in Table III.

## TABLE III

### EFFECTS OF GLYCERINE/HSH ON ALITAME STABILITY

### IN GUM FORMULATIONS

% Alitame (% of original remaining)

| WEEKS | A | B | C | D |
|---|---|---|---|---|
| 0 | 0.039 (100) | 0.040 (100) | 0.037 (100) | 0.039 (100) |
| 1 | 0.029 (74) | 0.032 (80) | 0.034 (92) | 0.033 (85) |
| 2 | 0.023 (59) | 0.028 (70) | 0.036 (97) | 0.025 (64) |
| 4 | 0.016 (41) | 0.022 (55) | 0.027 (73) | 0.021 (54) |
| 6 | 0.011 (28) | 0.018 (45) | 0.025 (68) | 0.018 (46) |
| 8 | 0.008 (20) | 0.016 (40) | 0.021 (57) | 0.011 (28) |

The results showed that the Alitame in Formula A degraded the most. This formula contained sorbitol, mannitol and glycerine. In formula B where glycerine was removed, there was a significant improvement in stability. Formula C, which had HSH but no glycerine, had the best shelf life stability of Alitame and was significantly better than Formula B. Formula D, which had HSH and glycerine, showed similar degradation as Formula B.

Comparisons of percentage of remaining Alitame at each test period for formulas A vs. D and B vs. C are shown below:

## TABLE IV

| WEEKS | % REMAINING FORMULA A | % REMAINING FORMULA D | % DIFFERENCE | % INCREASE %DIFFERENCE/% REMAINING IN A |
|---|---|---|---|---|
| 1 | 74 | 85 | +11 | 15 |
| 2 | 59 | 64 | +5 | 8 |
| 4 | 41 | 54 | +13 | 32 |
| 6 | 28 | 46 | +18 | 64 |
| 8 | 20 | 28 | +8 | 40 |

Average = 32% Improvement

| WEEKS | % REMAINING FORMULA B | % REMAINING FORMULA C | % DIFFERENCE | % INCREASE %DIFFERENCE/% REMAINING IN B |
|---|---|---|---|---|
| 1 | 80 | 92 | +12 | 15 |
| 2 | 70 | 97 | +27 | 39 |
| 4 | 55 | 73 | +18 | 33 |
| 6 | 45 | 68 | +23 | 51 |
| 8 | 40 | 57 | +17 | 43 |

Average = 36% Improvement

Comparing formulas A vs. D, the amount of glycerine is about the same, but the sorbitol liquid was replaced with HSH at the same moisture level (both formulas A and D had 2.3% moisture contributed from the sorbitol liquid or the HSH). Due to the use of HSH, there was an average increase in stability at 29°C (85°F) of 32%

Comparing formulas B vs. C, the amount of glycerine is 0%, but the sorbitol liquid was replaced with HSH at the same moisture level (both formulas B and C had 4.6% moisture contributed from the sorbitol liquid or HSH). Due to the use of HSH, there was an average increase in stability at 29°C (85°F) of 36%

Generally, by the use of HSH, it is believed that the amount of Alitame which will need to be formulated in the gum is from 10 to 50% less than the amount which would need to be formulated to provide the same recovery after eight weeks of storage of a gum at 29°C (85°F).

From the above results, it is believed that HSH can be utilized, and/or glycerine can be avoided, in comestibles to prevent Alitame degradation. Where effective amounts of Alitame are used, comestibles made with Alitame may be stored at 29°C (85°F) for eight weeks and have increased stability by at least 20% over a comparable formula without HSH.

Where glycerine was excluded, and no HSH was used in the gum, after eight weeks of storage at 29°C (85°F) 40% of the Alitame originally present in the gum was still recoverable.

Where HSH was included in, and glycerine was excluded from, the chewing gum, a gum was produced which provided Alitame stability such that after eight weeks of storage at 29°C (85°F) over 50% of the amount of Alitame originally present in the gum was still recoverable.

The preferred comestible of the present invention is a sugarless chewing gum having the following composition: 20-30% base, 5-25% HSH, 40-60% sugar alcohols (preferably mannitol and sorbitol), 0.005-0.2% Alitame and no glycerine.

## Claims

1. An ingestible product comprising sweetness imparting amounts of Alitame, characterised in that there is included aqueous hydrogenated starch hydrolysate in amounts effective to stabilize said Alitame sweetening agent against decomposition during storage at 29°C (85°F) for eight weeks, whereby at least a 20% increase in Alitame stability, compared with a similar formula without HSH, is achieved.

2. The ingestible product of claim 1 which is a chewing gum product.

3. The ingestible product of claim 1 or claim 2 comprising 0.005% to 0.2% Alitame.

4. The ingestible product of any one of claims 1 to 3 wherein the amount of hydrogenated starch hydrolysate included comprises between 5% and 25% of the product.

5. A comestible composition comprising an admixture of
   a) a formulated amount of unencapsulated Alitame sweetening agent and
   b) an aqueous solution of hydrogenated starch hydrolysate,
   c) wherein the aqueous solution of hydrogenated starch hydrolysate is in amounts effective to stabilize said Alitame sweetener when said comestible is stored at 29°C (85°F) for at least eight weeks, at least 40% of the original formulated amount of said Alitame sweetening agent is recoverable,
   d) said formulated amount of Alitame sweetening agent being about 10 to about 50% less than the amount of said Alitame sweetening agent which would have been needed to recover an equal amount of Alitame sweetener in the absence of the aqueous hydrogenated starch hydrolysate stabilizer.

6. The comestible composition of Claim 5 which is a chewing gum composition.

7. The comestible of claim 5 wherein the amount of hydrogenated starch hydrolysate employed is between about 5% and about 25% of the comestible.

8. The comestible of Claim 5 wherein the formulated amount of Alitame comprises between about 0.005% and about 0.2% of the comestible.

9. In a process for preparing and storing a comestible composition which is an admixture comprising a formulated, and at least partially sweetening, amount of unencapsulated Alitame sweetening agent
   said composition further having an alditol content which, upon the normal commercial storage of said composition in the absence of a stabilizer for said Alitame sweetening agent, would cause or accelerate the decomposition of said formulated amount of said Alitame sweetening agent into decomposition products which are devoid of sweetening characteristics,
   the process which comprises further admixing into and formulating said comestible composition with, as a stabilizer for said Alitame sweetening agent, an aqueous solution of hydrogenated starch hydrolysate in such amounts as to stabilize said Alitame sweetening agent so as to allow for the recovery from said comestible composition of at least 50% of said formulated amount of Alitame sweetening agent after the normal commercial storage of said comestible composition for at least eight weeks.

10. A process for reducing the amount of unencapsulated Alitame needed to be formulated into a comestible product which is at least partially sweetened therewith and which also contains Alitame destabilizing amounts of alditols,
    and while still providing for a recoverable Alitame content of X% after the ambient commercial storage of said comestible product for at least eight weeks,
    said X% being at least 20% of the reduced amount of said Alitame to be formulated into said comestible product,
    which comprises:
    formulating said comestible product with an amount of Alitame which is about 10 to 50% less than the amount of Alitame which would have been needed in said comestible product, in the absence of a stabilizer for said Alitame, to provide for a recoverable level of X% of Alitame after said storage period, and
    with, as a stabilizer for such reduced amount of Alitame, an aqueous solution of hydrogenated starch hydrolysate in such amounts as to effectively stabilize said Alitame and provide for a recoverable Alitame content of X% after said storage period.

11. A comestible composition comprising an admixture of
    (i) at least 40% sugar alcohols,
    (ii) 0.005 to 0.2% of unencapsulated Alitame sweetening agent, and
    (iii) an aqueous solution of hydrogenated starch hydrolysate in amounts effective to stabilize said Alitame sweetening agent when said comestible composition is stored at 29°C (85°F) for at least eight weeks so that at least 40% of said (ii) amount of Alitame sweetening agent is then recoverable.

12. The comestible of Claim 11 wherein the composition comprises chewing gum.

13. The comestible of Claim 12 wherein the chewing gum comprises
    (i) 20 to 30% gum base;
    (ii) 5 to 25% HSH syrup, and
    (iii) 40 to 60% alditols selected from sorbitol, mannitol and mixtures thereof.

14. The comestible of Claim 12 or Claim 13 wherein the gum formulation is substantially free of glycerine.

15. The comestible of any one of claims 11 to 14 wherein after eight weeks of storage over 50% of the original Alitame sweetening agent is recoverable.

## Patentansprüche

1. Nahrungsmittelprodukt, das süßende Mengen an Alitam enthält,
   **dadurch gekennzeichnet,**
   daß ein wäßriges hydriertes Stärkehydrolysat in wirksamen Mengen vorhanden ist, um das Alitam-Süßungsmittel gegen Zersetzung während einer Lagerung bei 29°C (85°F) für acht Wochen zu stabilisieren, wobei ein mindestens 20 %-iger Anstieg in der Stabilität von Alitam verglichen mit einer ähnlichen Formulierung ohne HSH erreicht wird.

2. Nahrungsmittelprodukt nach Anspruch 1, das ein Kaugummiprodukt ist.

3. Nahrungsmittelprodukt nach Anspruch 1 oder 2, das 0,005 % bis 0,2 % Alitam umfaßt.

4. Nahrungsmittelprodukt nach einem der Ansprüche 1 bis 3, worin die Menge an enthaltenem hydriertem Stärkehydrolysat zwischen 5 % und 25 % des Produkts umfaßt.

5. Lebensmittelzusammensetzung, umfassend ein Gemisch von
   a) einer formulierten Menge von unverkapseltem Alitam-Süßungsmittel und
   b) einer wäßrigen Lösung von hydriertem Stärkehydrolysat,
   c) worin die wäßrige Lösung von hydriertem Stärkehydrolysat in wirksamen Mengen ist, um den Alitam-Süßstoff zu stabilisieren, wenn das Lebensmittel bei 29°C (85°F) für mindestens acht Wochen gelagert wird, wobei mindestens 40 % der ursprünglich formulierten Menge des Alitam-Süßungsmittels rückgewinnbar ist,
   d) wobei die formulierte Menge an Alitam-Süßungsmittel etwa 10 bis etwa 50 % weniger als die Menge des Alitam-Süßungsmittels ist, die zur Rückgewinnung einer gleichen Menge an Alitam-Süßstoff in Abwesenheit des wäßrigen hydrierten Stärkehydrolysat-Stabilisators benötigt worden wäre.

6. Lebensmittelzusammensetzung nach Anspruch 5, die eine Kaugummizusammensetzung ist.

7. Lebensmittel nach Anspruch 5, worin die verwendete Menge an hydriertem Stärkehydrolysat zwischen etwa 5 % und etwa 25 % des Lebensmittels ist.

8. Lebensmittel nach Anspruch 5, worin die formulierte Menge an Alitam zwischen etwa 0,005 % und etwa 0,2 % des Lebensmittels umfaßt.

9. Bei einem Verfahren zur Herstellung und Lagerung einer Lebensmittelzusammensetzung, die ein Gemisch ist, das eine formulierte und mindestens teilweise süßende Menge von unverkapseltem Alitam-Süßungsmittel enthält,
   wobei die Zusammensetzung weiterhin einen Alditolgehalt aufweist, der bei der normalen kommerziellen Lagerung der Zusammensetzung in Abwesenheit eines Stabilisators für das Alitam-Süßungsmittel die Zersetzung der formulierten Menge des Alitam-Süßungsmittels in Zersetzungsprodukte, die frei von Süßungseigenschaften sind, bewirken oder beschleunigen würde, das Verfahren, umfassend die weitere Zumischung und Formulierung einer wäßrigen Lösung von hydriertem Stärkehydrolysat als Stabilisator für das Alitam-Süßungsmittel mit der Lebensmittelzusammensetzung in solchen Mengen, um das Alitam-Süßungsmittel zu stabilisieren, so daß die Rückgewinnung von mindestens 50 % der formulierten Menge an Alitam-Süßungsmittel aus der Lebensmittelzusammensetzung nach der normalen kommerziellen Lagerung der Lebensmittelzusammensetzung für mindestens acht Wochen ermöglicht wird.

10. Verfahren zur Verringerung der Menge an unverkapseltem Alitam, die in ein Lebensmittelprodukt einformuliert werden muß, das mindestens teilweise damit gesüßt wird und das auch Alitam-destabilisierende Mengen an Alditolen enthält,
und das noch einen rückgewinnbaren Alitam-Gehalt von X % nach der kommerziellen Lagerung des Produkts für mindestens acht Wochen bei Umgebungsbedingungen ergibt,
wobei X % mindestens 20 % der verringerten Menge des in das Lebensmittelprodukt einzuformulierenden Alitams ist,
umfassend: Formulieren des Lebensmittelprodukts mit einer Alitammenge, die etwa 10 bis 50 % geringer als die Alitammenge ist, die in Abwesenheit eines Stabilisators für das Alitam in dem Lebensmittelprodukt benötigt worden wäre, um für eine rückgewinnbare Konzentration von X % Alitam nach der Lagerungsperiode zu sorgen, und
mit einer wäßrigen Lösung von hydriertem Stärkehydrolysat als Stabilisator für eine derartig verringerte Menge an Alitam in solchen Mengen, um das Alitam wirksam zu stabilisieren und für einen rückgewinnbaren Alitamgehalt von X % nach der Lagerungsperiode zu sorgen.

11. Lebensmittelzusammensetzung, umfassend ein Gemisch von
i) mindestens 40 % Zuckeralkoholen,
ii) 0,005 bis 0,2 % unverkapseltem Alitam-Süßungsmittel und
iii) einer wäßrigen Lösung von hydriertem Stärkehydrolysat in wirksamen Mengen, um das Alitam-Süßungsmittel zu stabilisieren, wenn die Lebensmittelzusammensetzung bei 29°C (85°F) für mindestens acht Wochen gelagert wird, so daß mindestens 40 % der Menge ii) an Alitam-Süßungsmittel dann rückgewinnbar sind.

12. Lebensmittel nach Anspruch 11, worin die Zusammensetzung Kaugummi umfaßt.

13. Lebensmittel nach Anspruch 12, worin der Kaugummi umfaßt
i) 20 bis 30 % Gummigrundmasse,
ii) 5 bis 25 % HSH-Sirup und
iii) 40 bis 60 % Alditole, ausgewählt aus Sorbitol, Mannitol und Gemischen davon.

14. Lebensmittel nach Anspruch 12 oder 13, worin die Gummiformulierung im wesentlichen frei von Glycerin ist.

15. Lebensmittel nach einem der Ansprüche 11 bis 14, worin nach acht Wochen Lagerung über 50 % des ursprünglichen Alitam-Süßungsmittels rückgewinnbar sind.

## Revendications

1. Produit comestible comprenant une quantité d'alitame lui conférant un caractère sucré, caractérisé en ce qu'il comprend un hydrolysat d'amidon hydrogéné aqueux (HSH) en une quantité suffisante pour stabiliser l'édulcorant alitame vis-à-vis d'une décomposition pendant huit semaines de conservation à 29°C (85°F), en permettant d'obtenir une augmentation de la stabilité de l'alitame d'au moins 20 % par rapport à une formule analogue sans HSH.

2. Produit comestible selon la revendication 1, qui est un produit de gomme à mâcher.

3. Produit comestible selon la revendication 1 ou la revendication 2, qui comprend de 0,005 à 0,2 % d'alitame.

4. Produit comestible selon l'une quelconque des revendications 1 à 3, dans lequel la quantité incorporée d'hydrolysat d'amidon hydrogéné est de 5 à 25 % par rapport au produit.

**5.** Composition comestible comprenant en mélange
   a) une quantité formulée d'un édulcorant alitame encapsulé, et
   b) une solution aqueuse d'hydrolysat d'amidon hydrogéné,
   c) où la solution aqueuse de l'hydrolysat d'amidon hydrogéné est présente en une quantité permettant de stabiliser l'édulcorant alitame quand le produit comestible est conservé pendant au moins huit semaines à 29°C (85°F), au moins 40 % de la quantité formulée initiale de l'édulcorant alitame étant récupérés,
   d) cette quantité formulée de l'édulcorant alitame étant d'environ 10 à environ 50 % inférieure à la quantité de l'édulcorant alitame qui aurait été nécessaire pour récupérer une quantité égale de l'édulcorant alitame, en l'absence du stabilisant constitué d'un hydrolysat d'amidon hydrogéné aqueux.

**6.** Composition comestible selon la revendication 5, qui est une composition de gomme à mâcher.

**7.** Composition comestible selon la revendication 5, dans laquelle la quantité d'hydrolysat d'amidon hydrogéné utilisée est comprise entre environ 5 et environ 25 % de la composition comestible.

**8.** Composition comestible selon la revendication 5, dans laquelle la quantité formulée d'alitame est comprise entre environ 0,005 et environ 0,2 % de la composition comestible.

**9.** Dans un procédé pour préparer et conserver une composition comestible qui est constituée d'un mélange comprenant une quantité formulée, et assurant au moins partiellement une édulcoration, d'un édulcorant alitame encapsulé,
   cette composition contenant en outre un alditol en une quantité qui, après conservation industrielle normale de cette composition en l'absence de stabilisant de l'édulcorant alitame, provoquerait ou accélérerait la décomposition de la quantité formulée de l'édulcorant alitame en des produits de décomposition ne présentant pas de caractéristiques édulcorantes,
   perfectionnement qui consiste en outre à mélanger à la composition comestible, en la formulant, et en tant que stabilisant de l'édulcorant alitame, une solution aqueuse d'un hydrolysat d'amidon hydrogéné, en des quantités permettant de stabiliser l'édulcorant alitame de façon à permettre la récupération, à partir de la composition comestible, d'au moins 50 % de la quantité formulée de l'édulcorant alitame après conservation industrielle normale de la composition comestible pendant au moins huit semaines.

**10.** Procédé pour réduire la quantité d'alitame non encapsulé devant être formulée pour donner un produit comestible qui est au moins partiellement édulcoré par elle, et qui aussi contient des alditols en des quantités assurant la déstabilisation de l'alitame,
   et, tout en prévoyant encore une quantité récupérable d'alitame de X % après conservation industrielle, dans les conditions ambiantes, du produit comestible pendant au moins huit semaines,
   le pourcentage de X % étant d'au moins 20 % de la quantité réduite de l'alitame destinée à être formulée pour donner le produit comestible,
   qui consiste
   à formuler ledit produit comestible avec une quantité d'alitame d'environ 10 à 50 % inférieure à la quantité d'alitame qui aurait été nécessaire dans le produit comestible, en l'absence d'un stabilisant de l'alitame, pour conduire à un pourcentage récupérable de X % d'alitame après la période de conservation, et
   avec, en tant que stabilisant de la quantité réduite d'alitame, une solution aqueuse d'un hydrolysat d'amidon hydrogéné, en des quantités permettant de stabiliser efficacement l'alitame et de conduire à une teneur récupérable en alitame de X % après la période de conservation.

**11.** Composition comestible comprenant en mélange
   (i) au moins 40 % d'alcools de sucre,
   (ii) de 0,005 à 0,2 % de l'édulcorant alitame non encapsulé, et
   (iii) une solution aqueuse d'un hydrolysat d'amidon hydrogéné en des quantités permettant de stabiliser l'édulcorant alitame quand la composition comestible est conservée à 29°C (85°F) pendant au moins huit jours, de façon que l'on puisse ensuite récupérer au moins 40 % de la quantité (ii) de l'édulcorant alitame.

**12.** Composition comestible selon la revendication 11, dans laquelle la composition comprend une gomme à mâcher.

13. Composition comestible selon la revendication 12, dans laquelle la gomme à mâcher comprend :
    (i) de 20 à 30 % de gomme-base ;
    (ii) de 5 à 25 % de sirop de HSH, et
    (iii) de 40 à 60 % d'alditols choisis parmi le sorbitol, le mannitol et leurs mélanges.

14. Composition comestible selon la revendication 12 ou la revendication 13, dans laquelle la formulation de gomme est essentiellement exempte de glycérol.

15. Composition comestible selon l'une quelconque des revendications 11 à 14, dans laquelle, après huit semaines de conservation, on peut récupérer plus de 50 % de l'édulcorant alitame original.